# EUROPÄISCHE PATENTSCHRIFT

(11) **EP 0 763 839 B1**
(45) Veröffentlichungstag und Bekanntmachung des Hinweises auf die Patenterteilung: **21.11.2001**
(21) Anmeldenummer: 96114429.2
(22) Anmeldetag: 10.09.1996
(51) Int. Cl.: H01H 31/00, H01H 3/40

(54) **Antrieb für das bewegbare Kontaktstück eines Trenn-Erdungsschalters**
Driving device for the movable contact of a disconnecting and earthing switch
Dispositif de commande pour le contact mobile d'un sectionneur et interrupteur de mise à la terre

(30) Priorität: 16.09.1995 DE 19534392
(43) Veröffentlichungstag der Anmeldung: 19.03.1997
(73) Patentinhaber: ABB PATENT GmbH, 68526 Ladenburg (DE)
(72) Erfinder: Peters, Hauke, 63450 Hanau (DE); Schumacher, Martin, Dr., 63517 Rodenbach (DE)
(74) Vertreter: Rupprecht, Klaus, Dipl.-Ing.

(56) Entgegenhaltungen:
- EP-A- 0 393 557
- DE-A- 3 710 374
- DE-C- 598 960

## Beschreibung

Die Erfindung betrifft einen Antrieb nach dem Oberbegriff des Anspruches 1.

Beispielsweise ein Trenn-Erdungsschalter, der von einem Antrieb der eingangs genannten Art betätigt wird, besitzt ein schwenkbares Trennmesser, das mit den beiden festen Kontaktstükken in Eingriff bringbar ist; mit dem ersten festen Kontaktstück bildet das Trennmesser einen Trennschalter und mit dem zweiten festen Kontaktstück einen Erdungsschalter; in der ersten Stellung ist der Trennschalter eingeschaltet, der Erdungsschalter ausgeschaltet, und in der zweiten Stellung ist der Trennschalter ausgeschaltet und der Erdungsschalter eingeschaltet. Das Trennmesser kann auch eine mittlere Stellung einnehmen, die die Stellung "Trennschalter AUS, Erdungsschalter AUS" bildet. Die Funktionen Trennen und Erden sind damit in einem einzigen Schaltgerät zusammengefaßt.

Bei einem Trenn-Erdungsschalter, der ein linear bewegbares Kontaktstück besitzt, sind die Verhältnisse ähnlich. Auch hier wird das bewegbare Kontaktstück mit einem ersten und einem zweiten festen Kontaktstück in Eingriff gebracht; in einer weiteren Stellung ist es weder mit dem ersten noch mit dem zweiten Kontaktstück in Eingriff. Diese Stellung wäre die Trennstellung, die insbesondere zwischen den beiden Stellungen liegen kann, in der das bewegliche Kontaktstück mit den beiden festen Kontaktstücken in Eingriff steht.

Das Antriebssystem bzw. der Antrieb, der hierzu erforderlich ist, muß diese drei Stellungen mit guter Genauigkeit sowohl elektrisch in größenordnungsmäßig 1 bis 10 Sekunden als auch von Hand bedienbar in beliebiger Zeit anfahren können. Zusätzlich muß der Antrieb selbsthemmend sein, so daß die Stellungen des bewegbaren Kontaktstückes nicht von in der Schaltanlage auftretenden Kräften beeinflußt werden können.

Bei den bekannten Anordnungen wird typischweise eine Antriebswelle von einem Elektromotor über z. B. ein Stirnradgetriebe, das hinreichend untersetzt ist, und über hubmagnetgesteuerte Anschläge und/oder über mechanische Konstruktionen, die Motornachlauf oder nicht exakte Handbetätigung ausgleichen können, in die drei Stellungen verbracht. Insgesamt führt die Forderung nach einer exakt auch von Hand anzufahrenden Mittelstellung bei den heutigen Antrieben zu erheblichem Aufwand in Konstruktion und Kosten.

Aus der DE 37 103 74 A1 ist ein Antrieb für einen Trennschalter der eingangs genannten Art bekannt geworden, bei dem zwei Antriebelemente, die von einem einzigen Motor angetrieben werden, in Schlitze in einer Scheibe einfahren und diese in entgegengesetzte Richtung verschwenken. Die Scheibe ist mit einem beweglichen Kontaktstück verbunden. Eine Mittelstellung - Trennschalter und Erdungsschalter " aus " - wird durch Formgebung der Scheibe bezogen auf eine Verriegelungsscheibe erreicht, wobei allerdings der Motor entkoppelt und verriegelt werden muss. Dieser Antrieb dient als so genannter Drei-Stellungs-Antrieb.

Aus der EP 0393 757 A2 ist ein Antrieb für einen Trennschalter bekannt geworden, bei dem eine Gewindespindel vorgesehen ist, auf der eine Mutter aufgeschraubt ist, an der zwei Mitnehmer angeschlossen sind, die wechselweise in je einen Schlitz in einer Mitnehmerscheibe eingreifen und diese verschwenken. Die Mitnehmerscheibe wird dabei lediglich in zwei Stellungen verschwenkt; eine festgelegte mittlere Stellung zwischen zwei Endstellungen ist nicht vorgesehen.

Aus der DE 598 966 A1 ist eine Mitnehmerscheibe nicht entnehmbar.

Aufgabe der Erfindung ist es, einen Antrieb der eingangs genannten Art zu schaffen, der einfach sowohl elektrisch als auch manuell bedienbar ist, wobei die drei Stellungen exakt angefahren werden, auch wenn der Antrieb manuell betätigt wird.

Diese Aufgabe wird erfindungsgemäß durch die Merkmale des Anspruches 1 gelöst. Die beiden Antriebelemente sind erfindungsgemäß von jeweils einem eigenen Motor angetrieben und können getrennt voneinander und parallel zueinander lineare verschoben werden.

Dadurch wird erreicht, dass die Antriebsscheibe außer in zwei Endstellungen auch in einer Mittelstellung exakt festgelegt werden kann.

Eine vorteilhafte Ausgestaltung der Erfindung ist dadurch gekennzeichnet, dass die Antriebselemente als Verschiebemuttern auf je einer Gewindespindel angeordnet sind. Dadurch kann jede Gewindespindel mittels eines eigenen Motors angetrieben werden ; die Motoren können dabei unabhängig voneinander betätigt werden.

Wenn die Antriebsscheibe mit einer Antriebswelle verbunden ist, die ein als Trennmesser ausgebildetes bewegbares Kontaktstück angreift, dann kann die Drehbewegung der Antriebswelle unmittelbar direkt oder unter Zwischenfügung eines Übersetzungsgetriebes auf das Trennmesser übertragen werden. In diesem Falle sind die Ausnehmungen so ausgebildet, daß die Ausnehmungen als eine V-Form miteinander bildende radiale Schlitze ausgebildet und die Antriebselemente parallel zueinander linear verschiebbar sind.

Der Winkel den die beiden Schlitze miteinander einschließen, entspricht dem von dem Trennmesser überdeckten Winkel; bei einer bevorzugten Ausführungsform, bei der die ersten und zweiten Kontaktstücke, bezogen auf die Mittelachse des Trennmessers, 90° voneinander entfernt sind, beträgt der Winkel zwischen den beiden Schlitzen 90°.

Eine bevorzugte Ausführungsform der Erfindung kann dahin gehen, daß der Schlitzbereich zwischen den Schlitzen eine radiale Verlängerung aufweist, die in der ersten und zweiten Stellung jeweils gegen einen Anschlag anstößt.

Weitere vorteilhafte Ausgestaltungen und Verbesserungen der Erfindung sind den Unteransprüchen zu entnehmen. Durch die besonderen Ausgestaltungen insbesondere der Mitnehmerscheibe und der Zuordnung der beiden Gewindespindeln wird ein Dreistellungsantrieb erzeugt, der in allen drei Stellungen verriegelt ist.

Wenn als bewegliches Kontaktstück ein linear verschiebbares Kontaktstück vorgesehen ist, dann wird die Antriebswelle mit einer Verzahnung versehen sein, die mit dem vorzugsweise als Zahnstange ausgebildeten bewegbaren Kontaktstück in Eingriff steht, so daß mit der Drehbewegung der Antriebswelle auch das bewegbare Kontaktstück linear verschoben werden kann. Dabei kann das bewegbare Kontaktstück in einer zwischen den beiden festen Kontaktstücken befindlichen Führung geführt sein, in welche die Antriebswelle hineingreift, so daß das bewegliche Kontaktstück links oder rechts aus der Führung herausgefahren wird. Wenn die Trenn-Erdungsschalteranordnung innerhalb einer Metallkapselung einer SF₆-gasisolierten Anlage untergebracht ist und es sich hierbei um einen Schubschalter handelt, dann könnte die Antriebswelle außerhalb der Metallkapselung vorgesehen sein und mit einem mit dem beweglichen Kontaktstück verbundenen stangenartigen Isolierzwischenstück in Eingriff stehen, wobei auch hier ein Zahnstangenantrieb vorgesehen ist. Das bewegliche Kontaktstück wird dabei in einer ersten Stellung mit einem ersten festen Kontaktstück in Verbindung stehen, wobei die Führung, in der das bewegliche Kontaktstück linear geführt ist, elektrisch leitend mit einem weiterführenden Leiter verbunden ist. Die Strecke, die zwischen der Führung und dem zweiten festen Kontaktstück besteht, ist dann von der als Isolierstück ausgebildeten Antriebsspindel überbrückt, so daß hier eine Isolierung vorhanden ist. Wenn das bewegliche Kontaktstück in die Erdungsstellung verbracht wird, dann wird es durch die Führung hindurch hin zum zweiten festen Kontaktstück gezogen.

Es sind noch weitere Anwendungsmöglichkeiten denkbar. Beispielsweise können die beiden Antriebselemente auf Gewindespindeln verfahrbar sein, die unter einem Winkel von beispielsweise 90° zueinander angeordnet sind; zwischen den beiden Gewindespindeln befindet sich dann die Antriebsscheibe.

Anhand der Zeichnung, in der ein Ausführungsbeispiel der Erfindung dargestellt ist, sollen die Erfindung sowie weitere vorteilhafte Ausgestaltungen und Verbesserungen näher erläutert werden.

Es zeigen:
- Fig. 1: eine schematische Darstellung eines erfindungsgemäßen Antriebes in einer mittleren Stellung und
- Fig. 2 und 3: den Antrieb gemäß Fig. 1 in zwei Stellungen beidseitig zu der mittleren Stellung.

Die Erfindung wird hier in besonderer Weise anhand eines Trennschalters erläutert, der ein schwenkbares Trennschaltermesser aufweist. Dieses Trennschaltermesser, das nicht dargestellt ist und das beispielsweise zu einem Trennschalter gehört, der beispielsweise in einer Hochspannungsschaltanlage des Typs ELK 04 der Firma ABB Calor Emag Schaltanlagen AG eingebaut ist, ist mit einer Antriebswelle 10 verbunden, die selbst wiederum mit einer Antriebsscheibe 11 drehfest verbunden ist, die eine Kreisform besitzt mit zwei Schlitzen 12, 13, die eine V-Form miteinander bilden, deren Öffnungswinkel 90° beträgt. Die Scheibe 11 besitzt einen kreisförmigen Abschnitt 14 außerhalb der V-Form und einen radialen Vorsprung 15 innerhalb der V-Form, wobei sich die Schlitze 12 und 13 in ihren Endbereichen V-förmig erweitern, so daß zwei senkrecht zueinander verlaufende Öffnungskanten 16 und 17 gebildet sind. Die Öffnungskante 17 ist dem Vorsprung 15 zugeordnet.

Der Vorsprung 15 besitzt eine parallel zu der Kante 17 verlaufende Kante 18, die in den Schlitz 13 einmündet; mit der Kante 16 fluchtet eine Kante 19, die ebenfalls in den Schlitz 13 einmündet und mit der Kante 18 ebenfalls eine V-Form bildet. Die Kanten 18 und 19 stehen senkrecht aufeinander, ebenso wie die Kanten 16 und 17.

Der Antriebsscheibe 11 zugeordnet sind zwei parallel zueinander verlaufende Stangen 20, 21, die als Gewindespindeln ausgebildet sind und mit je einem Elektromotor 22, 23 über ein Untersetzungsgetriebe 24 bzw. 25 gekoppelt sind. In dem Bereich der Gewindespindeln 20, 21, der sich nahe des Getriebes 24 bzw. 25 befindet, ist eine erste Quertraverse 26 vorgesehen; die beiden freien Enden sind mittels einer Quertraverse 27 verbunden. Die Gewindespindeln 20, 21 sowie die Traversen 26, 27 bilden miteinander ein Rechteck und die Antriebswelle 10 befindet sich etwa im Mittelpunkt der beiden Diagonalen. Auf den Gewindespindeln 20 und 21 laufen als Wandermuttern ausgebildete Rollenmitnehmer 28, 29, an denen Bolzen 30 und 31 vorgesehen sind, deren Außendurchmesser der lichten Weite der beiden Schlitze 12 bzw. 13 entspricht.

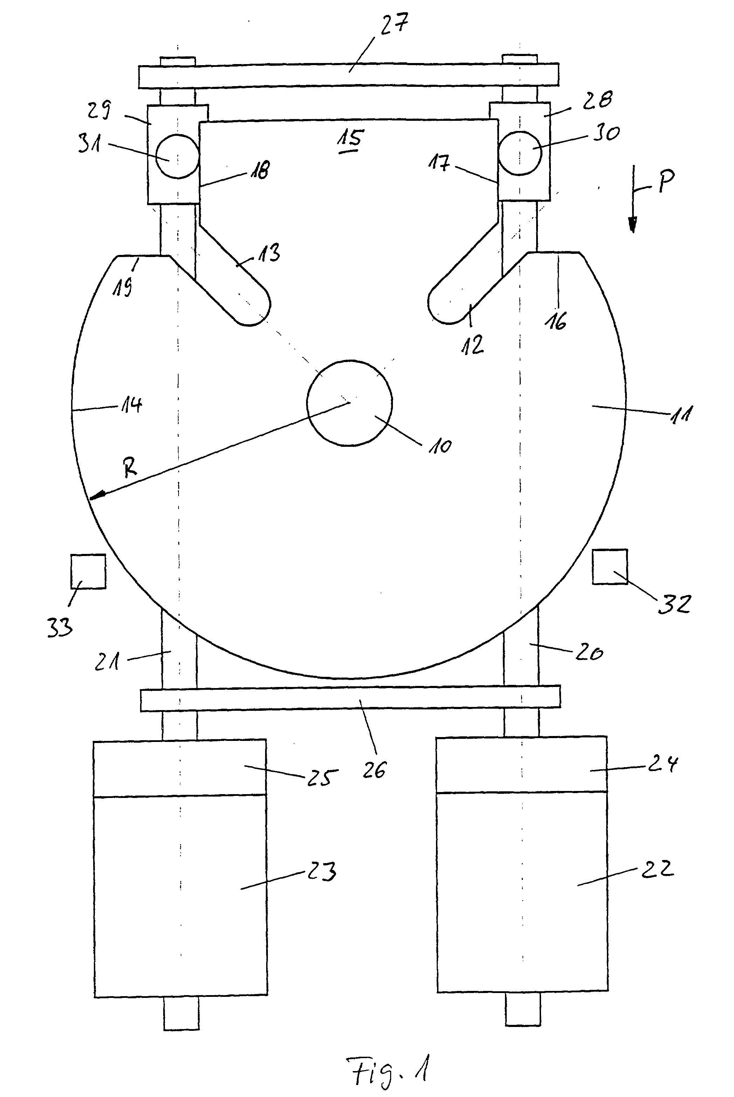

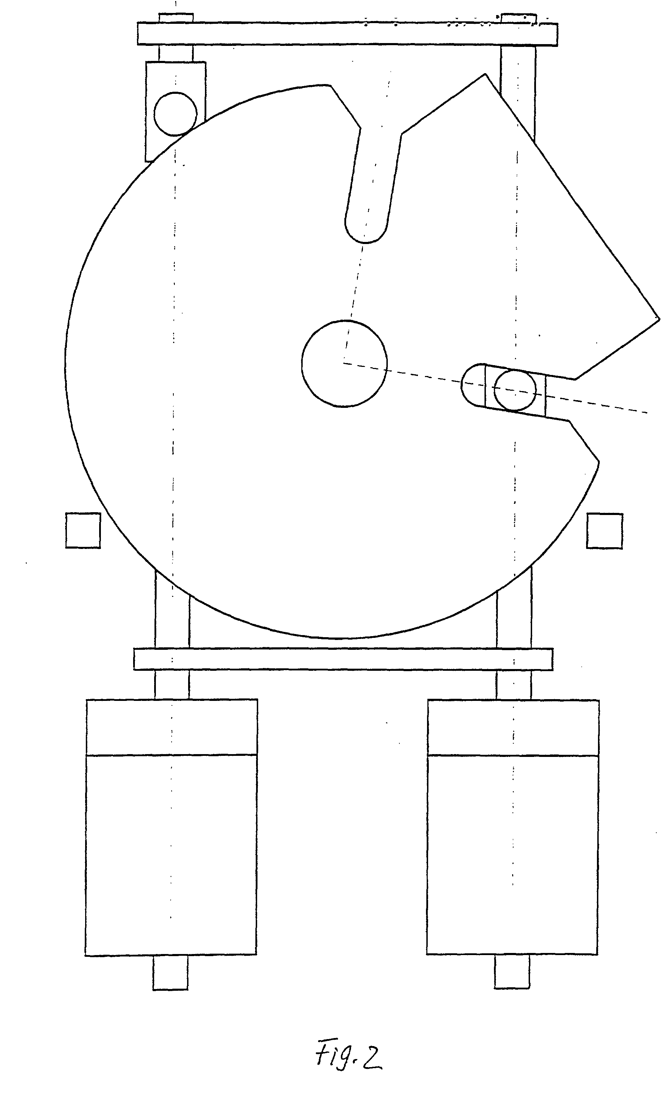

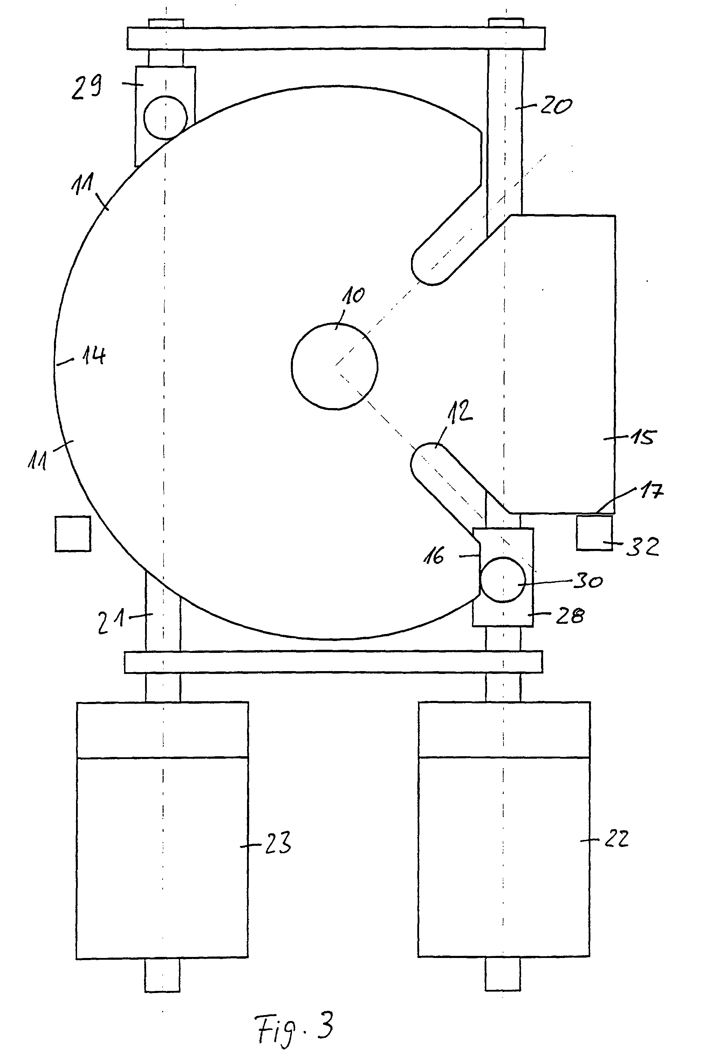

Der Radius R des kreisförmigen Abschnittes 14 oder der kreisförmigen Kante 14 der Antriebsscheibe ist so bemessen, daß die Rollenmitnehmer 28, 29 in den getriebeabseitigen Endstellungen (siehe Fig. 1) auf der Kante 14 gleiten können, wie aus den Fig. 2 und 3 ersichtlich. Der Abstand der beiden Spindeln 20, 21 ist so bemessen, daß beide Mitnehmer 28, 29 in dieser motorabseitigen Endstellung gegen die Kanten 17, 18 anliegen, so daß mittels dieser beiden Bolzen 30, 31 die Antriebsscheibe 11 in dieser mittleren Stellung festgehalten ist.

Wenn nun der Motor 22 derart angetrieben wird, daß die Spindel 20 so verdreht wird, daß der Rollenmitnehmer 28 in Pfeilrichtung P nach unten bewegt wird, also zum Elektromotor 22 hin, dann gelangt der Bolzen in den Bereich des Schlitzes 12 und der Kante 16 und verschwenkt die Antriebsscheibe 11, siehe Fig. 2, so weit, bis die Kante 16, die in der Ausgangsstellung gemäß Fig. 1 senkrecht zu der Mittelachse der Spindel 20 verläuft, in den Bereich der Kante 16, die in der Stellung gemäß Fig. 3, also der Endstellung, parallel zur Mittelachse der Spindel 20 verläuft. Dadurch kann sich der Rollenmitnehmer 28 mit dem Bolzen 30 noch um einen der Länge der Kante 16 entsprechenden Betrag verschieben, ohne daß die Antriebsscheibe 11 weiter verdreht wird. In der in Fig. 3 gezeigten Stellung liegt der Vorsprung 15 mit seiner Kante 17 gegen einen Anschlag 32 an, und die Antriebsscheibe 11 bliebt in der in Fig. 3 gezeigten Endstellung. Wenn die Antriebsscheibe 11 in die entgegengesetzte Richtung verfahren werden soll, dann wird zunächst der Rollenmitnehmer 28 entgegen der Pfeilrichtung P nach oben verfahren, wobei der Bolzen 30 wieder mit dem Schlitz 12 in Eingriff gelangt, wenn der Motor 23 betätigt worden wäre, dann würde dieser wegen der kreisförmigen Kante 14 den Rollenmitnehmer 29 nicht verschoben haben und sobald die Ausgangsstellung gemäß Fig. 1 wieder erreicht ist, wenn also die beiden Rollenmitnehmer 28 und 29 auf gleicher Höhe bzw. in gleichem Abstand von den Elektromotoren 22, 23 liegen, kann der Elektromotor 23 angetrieben werden, so daß der Rollenmitnehmer 29 über die Spindel 21 in Pfeilrichtung P verfahren wird. Wenn der Bolzen 31 in den Schlitz 13 eingreift, wird die Antriebsscheibe 11 entgegen dem Uhrzeigersinn verschwenkt, bis die Kante 18 gegen einen dem Anschlag 32 entsprechenden Anschlag 33 anschlägt und der Bolzen 31 gegen die parallel zur Spindelachse 21 liegende Kante 19 zum Anschlag kommt. Die Kante 14 hält den Bolzenmitnehmer 28 in der oberen Stellung, wie dies mit dem Rollenmitnehmer 29 geschah. Die Bolzen 30 und 21 sind dabei drehbar in den Rollenmitnehmern 28 und 29 gelagert, so daß sie eigentlich jeweils eine Rolle bilden, so daß sie auf den Kanten 14, 16, 17, 18 und 19 sowie den Innenkanten der Schlitze 12 und 13 leicht mit geringer Reibung entlangrollen können.

Anstatt der Elektromotoren 22 und 23 können die Spindeln 20 und 21 auch manuell angetrieben werden.

Es besteht auch die Möglichkeit, im Bereich der Traverse 26 und/oder 27 einen gewindefreien Abschnitt zu bilden, der der Länge der Rollenmitnehmer 28, 29 entspricht. Dann ist eine Feder vorzusehen, die den Rollenmitnehmer 28, 29 jeweils in Richtung nach oben, also von den Elektromotoren weg, bzw. nach unten bezüglich der Mittelstellung beaufschlagt, so daß dann, wenn die Rollenmitnehmer mit dem Gewinde der Gewindespindeln 20, 21 in Eingriff gelangen sollen, dies auch tatsächlich erfolgen kann. Ggf. können dann die beiden Anschläge 32 und 33 wegfallen.

Die Stellung gemäß der Fig. 1 ist bezogen auf das Trennschaltermesser so gewählt, daß in dieser Stellung das Kontaktmesser weder mit dem ersten Kontaktstück noch mit dem zweiten Kontaktstück in Eingriff steht; dies ist die Stellung "Trennschalter AUS - Erdungsschalter AUS". Die Stellung gemäß Fig. 3 ist die erste Stellung, in der das Kontaktmesser mit dem ersten Kontaktstück in Eingriff steht; dies ist die Stellung "Erdungsschalter EIN - Trennschalter AUS", wenn das erste Kontaktstück mit Erde verbunden ist. Die Stellung der Antriebsscheibe 11, bei der der Vorsprung um 180° gegenüber der Stellung gemäß Fig. 3 verdreht ist, wenn also die Kante 16 bzw. 19 auf der entgegengesetzt liegenden Seite in der Nähe der Spindel 21 parallel zu dieser verläuft, ist die Schaltstellung "Trennschalter EIN", in der das Trennmessser mit dem zweiten festen Kontaktstück in Eingriff steht.

Es besteht auch die Möglichkeit, je nach Motor 22, 23 das Getriebe 24 bzw. 25 wegzulassen; dies ist abhängig von dem erforderlichen Drehmoment und der jeweils erforderlichen Drehzahl.

Im Bereich der Handbetätigungseinrichtung (die nicht dargestellt ist) könnte eine Rutschkupplung vorgesehen werden, die dann anspricht, wenn der Vorsprung 15 gegen den Anschlag 32 oder 33 zum Anliegen kommt; zur Abschaltung der Motoren 22, 23 können auch entsprechende Schalter vorgesehen sein, die im Bereich der Traversen 26, 27 angeordnet sind und von den Rollenmitnehmern 28, 29 vor Erreichen der Traversen 26, 27 oder vor dem Ansprechen des Freilaufes betätigt werden. Die Abschaltung kann auch durch geeignete Schalter vorgesehen werden, die im Bereich der Mittelstellung angeordnet sind.

Die erfindungsgemäße Anordnung ist anhand eines Dreh-Trenn-Erdungsschalters beschrieben worden; es besteht natürlich auch die Möglichkeit, die Erfindung bei einem Trenn-Erdungsschalter zu verwenden, bei dem das bewegbare Kontaktstück ein linear verschiebbares Kontaktstück ist. Zu diesem Zweck wäre die Antriebswelle beispielsweise mit einer Längsverzahnung versehen, die mit einer Zahnstangenanordnung am beweglichen Kontaktstück in Eingriff steht.

Es besteht auch die Möglichkeit, bei allen diesen Anordnungen zwischen der Antriebswelle und dem bewegbaren Kontaktstück, also entweder dem schwenkbaren Trennmesser oder dem linear bewegbaren Kontaktstück, eine Übersetzungsgetriebeanordnung dazwischen zu fügen. Beispielsweise könnte die Antriebswelle 10 einen Kurbelhebel betätigen, der das linear verschiebbare Kontaktstück antreibt. Jedenfalls ist dadurch, daß die Erfindung anhand eines mit einem Trennmesser versehenen Schalters beschrieben ist, keine Einschränkung des Schutzumfanges gewollt. Die Schlitze 12, 13 der Antriebsscheibe 11 können auch durch geeignet ausgebildete Ausnehmungen gebildet werden, beispielsweise insbesondere dann, wenn die Gewindespindeln 20, 21 nicht parallel, sondern senkrecht zueinander verlaufen.

## Patentansprüche

1. Antrieb für das bewegbare Kontaktstück eines Trenn-Erdungsschalters, das aus einer ersten Schalterendstellung, in der es mit einem ersten festen Kontaktstück in Eingriff steht, über eine mittlere Stellung in eine zweite Schalterendstellung, in der es mit einem zweiten festen Kontaktstück in Eingriff steht, und zurückbewegbar ist, wobei eine Kontaktstück-Antriebswelle (10), deren Drehbewegung in die Bewegung des bewegbaren Kontaktstückes umgesetzt wird, mit einer mit zwei Ausnehmungen (12, 13) versehenen Antriebsscheibe (11) gekuppelt ist und zwei linear verschiebbare Antriebselemente (28, 29; 30, 31) vorgesehen sind, die jeweils in eine Ausnehmung (12, 13) eingreifen und die Antriebsscheibe (11) aus einer mittigen Stellung in einer Drehrichtung und entgegen dieser Drehrichtung in die erste und zweite Stellung verschwenken, so daß in der mittigen Stellung die mittlere Schalterstellung, z. B. "Trennschalter AUS - Erdungsschalter AUS", in der ersten Stellung eine erste Schalterstellung, z. B. "Trennschalter EIN - Erdungsschalter AUS", und in der zweiten Stellung die zweite Schalterstellung, z. B. "Trennschalter AUS - Erdungsschalter EIN", erreicht ist, **dadurch gekennzeichnet, daß** die beiden Antriebselemente (28, 29, 30, 31) von jeweils einem eigenen Motor (22, 23) angetrieben, getrennt voneinander und parallel zueinander linear verschiebbar sind.

2. Antrieb nach Anspruch 1, **dadurch gekennzeichnet, daß** die Antriebselemente (28, 29, 30, 31) als Verschiebemuttern auf je einer Gewindespindel (20,21) angeordnet sind.

3. Antrieb nach Anspruch 1 oder 2, **dadurch gekennzeichnet, daß** die Ausnehmungen als eine V-Form miteinander bildende radiale Schlitze (12, 13) ausgebildet sind.

4. Antrieb nach Anspruch 3, **dadurch gekennzeichnet, daß** die Schlitze (12, 13) entsprechend dem Umfangsabstand der Kontaktstücke einen bestimmte Winkel, vorzugsweise einen Winkel von 90° miteinander einnehmen.

5. Antrieb nach einem der Ansprüche 1 bis 4, **dadurch gekennzeichnet, daß** die Antriebsscheibe (11) außerhalb der V-Form einen kreisförmigen Abschnitt (14) und innerhalb der V-Form zwischen den Schlitzen (12, 13) einen radialen Vorsprung (15) aufweist, der von zwei Kanten (17, 18) begrenzt ist, die in der ersten und zweiten Stellung senkrecht zur Längsachse der Spindeln (20, 21) und in der mittleren Lage parallel dazu verlaufen und sich zwischen den Rollenmitnehmern 28, 29 befinden und in der ersten und zweiten Stellung jeweils gegen einen Anschlag (32, 33) mit den Kanten (17) bzw. den Kanten (18) anstoßen.

6. Antrieb nach einem der vorherigen Ansprüche, **dadurch gekennzeichnet, daß** die Antriebselemente (28, 29) mit einem Bolzenvorsprung (30, 31) gebildet sind, welcher jeweils in den zugehörigen Schlitz (12, 13) eingreift.

7. Antrieb nach Anspruch 6, **dadurch gekennzeichnet, daß** die Bolzenvorsprünge (30, 31) drehbar an den Rollenmitnehmern (28, 29) gelagert sind und somit jeweils eine Rolle bilden.

8. Antrieb nach einem der vorherigen Ansprüche, **dadurch gekennzeichnet, daß** die Gewindespindeln (20, 21) in ihren motorseitigen Endbereichen jeweils einen gewindefreien Abschnitt aufweisen, dessen Länge der Länge der Rollenmitnehmer (28, 29) entspricht, und daß die Rollenmitnehmer (28, 29) federnd gegen den benachbarten Endabschnitt des Gewindes der Gewindespindeln (20, 21) gedrückt sind.

9. Antrieb nach einem der vorherigen Ansprüche, **dadurch gekennzeichnet, daß** der kreisförmige Abschnitt (14) der Antriebsscheibe einen Radius (R) aufweist, der so bemessen ist, daß derjenige Rollenmitnehmer (28, 29) der nicht betätigt ist, auf der Außenkante (14) des kreisförmigen Abschnittes gleiten oder abrollen kann und von dieser in seiner Stellung gehalten ist.

10. Antrieb nach einem der vorherigen Ansprüche, **dadurch gekennzeichnet, daß** zwischen der Antriebswelle (10) und dem bewegbaren Kontaktstück ein Übersetzungsgetriebe vorgesehen ist.

## Claims

1. Drive for the movable contact piece of a disconnecter/earthing switch which [lacuna] from a first switch limit position, in which it engages with a first fixed contact piece, via a mid-position into a second switch limit position, in which it engages with a second fixed contact piece, and can be moved back, in which case a contact piece drive shaft (10), whose rotational movement is converted into the movement of the movable contact piece, is coupled to a drive disc (11) which is provided with two cutouts (12, 13), and two linearly displaceable drive elements (28, 29; 30, 31) are provided which each engage in one cutout (12, 13) and pivot the drive disc (11) from a central position in one rotation direction and counter to this rotation direction into the first and the second position, such that the mid-position, for example "disconnecter switch OFF - earthing switch OFF", is reached in the central position, a first switch position, for example "disconnecter switch ON - earthing switch OFF", is reached in the first position, and the second switch position, for example "disconnecter switch OFF - earthing switch ON", is reached in the second position **characterized in that** the two drive elements (28, 29, 30, 31) are each driven by their own motor (22, 23), and can be moved separately from one another and linearly parallel to one another.

2. Drive according to Claim 1, **characterized in that** the drive elements (28, 29, 30, 31) are arranged as movement nuts on a respective threaded spindle (20, 21).

3. Drive according to Claim 1 or 2, **characterized in that** the cutouts are designed as radial slots (12, 13) which form a V-shape with one another.

4. Drive according to Claim 3, **characterized in that** the slots (12, 13) assume a specific angle, preferably an angle of 90°, with respect to one another, corresponding to the circumferential distance between the contact pieces.

5. Drive according to one of Claims 1 to 4, **characterized in that** the drive disc (11) has a circular section (14) outside the V-shape and has a radial projection (15) within the V-shape between the slots (12, 13), which radial projection (15) is bounded by two edges (17, 18) which run at right angles to the longitudinal axis of the spindles (20, 21) in the first and the second position and run parallel thereto in the mid-position, and are located between the roller drivers 28, 29, and in the first and the second position in each case abut against a stop (32, 33) with the edges (17) or the edges (18), respectively.

6. Drive according to one of the preceding claims, **characterized in that** the drive elements (28, 29) are formed with a bolt projection (30, 31) which in each case engages in the associated slot (12, 13).

7. Drive according to Claim 6, **characterized in that** the bolt projections (30, 31) are mounted such that they can rotate on the roller drivers (28, 29) and thus in each case form one roller.

8. Drive according to one of the preceding claims, **characterized in that** the threaded spindles (20, 21) each have a thread-free section in their end regions of the motor side, the length of which section corresponds to the length of the roller drivers (28, 29) and **in that** the roller drivers (28, 29) are pressed in a sprung manner against the adjacent end section of the thread of the threaded spindles (20, 21).

9. Drive according to one of the preceding claims, **characterized in that** the circular section (14) of the drive disc has a radius (R) which is dimensioned such that that roller driver (28, 29) which is not operated can roll or slide on the outer edge (14) of the circular section and is held in its position by said outer edge (14).

10. Drive according to one of the preceding claims, **characterized in that** a step-up drive is provided between the drive shaft (10) and the movable contact piece.

## Revendications

1. Dispositif de commande pour le contact mobile d'un sectionncur-interrupteur de mise à la terre, qui peut être amené d'une première position extrême de commutateur, dans laquelle il est en prise avec un premier contact fixe, dans une deuxième position extrême de commutateur, dans laquelle il est en prise avec un deuxième contact fixe, et inversement, dans lequel un arbre (10) de commande de contact, dont la rotation est transformée en déplacement du contact mobile, est couplé à une came de commande (11) pourvue de deux échancrures (12, 13) et dans lequel il est prévu deux éléments de commande (28, 29; 30, 31) à déplacement linéaire, qui s'engagent chacun dans une échancrure (12, 13) et font pivoter la came de commande (11) depuis une position médiane dans un sens de rotation et dans le sens de rotation opposé dans les première et deuxième positions, de telle sorte que l'on obtienne dans la position médiane, la position de commutateur intermédiaire, par exemple "sectionneur OFF-interrupteur de mise à la terre OFF", dans la première position, une première position de commutateur, par example "sectionneur ON-interrupteur de mise à la terre OFF", et dans la deuxième position, une deuxième position de commutateur, par example "sectionneur OFF-interrupteur de mise à la terre ON", **caractérisé en ce que** les deux éléments de commande (28, 29; 30, 31) sont entraînés chacun par un moteur (22, 23) propre, et peuvent être déplacés linéairement, séparément l'un de l'autre et parallèlement l'un à l'autre.

2. Dispositif de commande selon la revendication 1, **caractérisé en ce que** les éléments de commande (28, 29; 30, 31) conformés en écrous de déplacement sont disposés chacun sur une broche filetée (20, 21).

3. Dispositif de commande selon la revendication 1 ou 2, **caractérisé en ce que** les échancrures sont conformées en fentes radiales (12, 13) qui définissent ensemble une forme de V.

4. Dispositif de commande selon la revendication 3, **caractérisé en ce que** les fentes (12, 13), en accord avec la distance angulaire entre les contacts, forment entre elles un angle déterminé, de préférence un angle de 90°.

5. Dispositif de commande selon des revendications 1 à 4, **caractérisé en ce que** la came de commande (11), à l'extérieur de la forme de V, comporte une portion (14) circulaire et, à l'intérieur de la forme de V, entre les fentes (12, 13), présente une saillie (15) radiale délimitée par deux bords (17, 18) qui, dans la première et la deuxième position, sont perpendiculaires à l'axe longitudinal des broches (20, 21) et, dans la position médiane, sont parallèles à celui-ci, sont situés entre les entraîneurs à galets (28, 29) et, dans la première et la deuxiéme position, viennent en butée chacun avec leurs arêtes (17) ou (18) respectives contre une butée (32, 33).

6. Dispositif de commande selon une des revendications précédentes, **caractérisé en ce que** les éléments de commande (28, 29) sont formés d'un bout d'axe (30, 31) qui s'engage dans la fente (12, 13) concernée.

7. Dispositif de commande selon la revendication 6, **caractérisé en ce que** les bouts d'axe (30, 31) sont montés tournants sur les entraîneurs à galets (28, 29) et forment ainsi chacun un galet.

8. Dispositif de commande selon une des revendications précédentes, **caractérisé en ce que** les broches filetées (20, 21), dans leur région terminale côté moteur comportent chacune un tronçon non fileté, dont la longueur correspond à la longueur des entraîneurs à galets (28, 29), et **en ce que** les entraîncurs à galets (28, 29) sont appliqués élastiquement contre le tronçon d'extrémité voisin du filetage des broches filetées (20, 21).

9. Dispositif de commande selon une des revendications précédentes, **caractérisé en ce que** la portion (14) circulaire de la came de commande présente un rayon (R) tel que l'entraîneur à galet (28, 29) qui n'est pas actionné puisse glisser ou rouler sur le bord extérieur (14) de la portion circulaire et être maintenu dans sa position par celui-ci.

10. Dispositif de commande selon une des revendications précédentes, **caractérisé en ce qu'**un mécanisme multiplicateur est prévu entre l'arbre d'entraînement (10) et le contact mobile.
